(19) Europäisches Patentamt
European Patent Office
Office européen des brevets

(11) Veröffentlichungsnummer : **0 358 123 B1**

(12) # EUROPÄISCHE PATENTSCHRIFT

(45) Veröffentlichungstag der Patentschrift :
**17.06.92 Patentblatt 92/25**

(51) Int. Cl.$^5$ : **B01D 53/36,** B01J 23/64

(21) Anmeldenummer : **89116175.4**

(22) Anmeldetag : **01.09.89**

(54) **Katalysator für die Beseitigung von in Abgasen überwiegend mit Alkohol betriebener Verbrennungskraftmaschinen enthaltenenSchadstoffen, Verfahren zur Herstellung und Verwendung.**

(30) Priorität : **07.09.88 DE 3830317**

(43) Veröffentlichungstag der Anmeldung :
**14.03.90 Patentblatt 90/11**

(45) Bekanntmachung des Hinweises auf die Patenterteilung :
**17.06.92 Patentblatt 92/25**

(84) Benannte Vertragsstaaten :
**DE FR GB**

(56) Entgegenhaltungen :
**EP-A- 0 075 124**
**EP-A- 0 208 434**
**EP-A- 0 246 031**
**EP-A- 0 267 711**
**GB-A- 2 006 038**

(73) Patentinhaber : **Degussa Aktiengesellschaft**
**Weissfrauenstrasse 9**
**W-6000 Frankfurt am Main 1 (DE)**

(72) Erfinder : **Engler, Bernd, Dr.**
**Treuener Strasse 2**
**W-6450 Hanau 9 (DE)**
Erfinder : **Koberstein, Edgar, Dr.**
**Wolfskernstrasse 8**
**W-8755 Alzenau (DE)**
Erfinder : **Lox, Egbert, Dr.**
**Grünaustrasse 9**
**W-6450 Hanau 9 (DE)**
Erfinder : **Völker, Herbert**
**Bogenstrasse 43**
**W-6450 Hanau 11 (DE)**

EP 0 358 123 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Katalysator für die Beseitigung von in Abgasen überwiegend mit Alkohol betriebener Verbrennungskraftmaschinen enthaltenen Schadstoffen, u. a. von Aldehyden, ein Verfahren zur Herstellung dieses Katalysators und seine Verwendung.

Im Zeichen einer weltweiten Energieverknappung werden in zunehmendem Maße außer Kraftstoffen aus Erdöldestillaten auch andere Energieträger für den Betrieb von Verbrennungskraftmaschinen verwendet. So wird z. B. in manchen Ländern bereits Methanol, hergestellt durch die Vergasung von Kohle, oder Ethanol, erhalten durch Vergärung von Biomasse oder Zuckerrohr und nachfolgende Destillation, mit Erfolg eingesetzt.

Ist eine Teilzumischung von Alkoholen zu Kraftstoffen für Verbrennungskraftmaschinen bis zu einer Konzentration von 15 Vol.% bereits durchaus üblich, so ist die Umstellung auf reine Alkoholmotoren, welche z.B. nur mit Ethanol oder Methanol oder überwiegend mit solchen Alkoholen unter geringem Benzinzusatz betrieben werden, in einigen Ländern schon vollzogen worden.

In den Abgasen von ausschließlich mit Benzin betriebenen Verbrennungskraftmaschinen kommen Aldehyde vor. Mit Alkohol betriebene Verbrennungskraftmaschinen emittieren aber mengenmäßig ein Vielfaches an Aldehyden. Hohe Aldehyd-Konzentrationen in der Umgebungsluft führen aber nicht nur zu Geruchsbelästigungen und zur Reizung der Schleimhäute, sondern es kann darüber hinaus - in Anwesenheit oder Abwesenheit von Stickoxiden - eine Fotooxidation der Aldehyde stattfinden, wobei phytotoxische Stoffe gebildet werden.

So entsteht z. B. aus Acetaldehyd, Sauerstoff und Stickstoffpentoxid ($N_2O_5$) sogenanntes PAN (Peroxiacetylnitrat, $CH_3CO_2ONO_2$), eine Verbindung, auf die die Wirkung des Los Angeles Smogs hauptsächlich zurückgeht.

Während für die Beseitigung der Schadstoffe Kohlenmonoxid, Kohlenwasserstoffe und Stickoxide eine bereits erprobte Technologie existiert, ist über eine wirksame Kontrolle der Aldehyde in den Abgasen von mit Alkohol betriebenen Motoren weniger bekannt.

So wurde gefunden, daß insbesondere Nichtedelmetall-Katalysatoren, wie z. B. Katalysatoren auf Basis von Kupfer-Chromoxid, bei ihrer Anwendung im Abgasstrom eines mit Alkohol betriebenen Motors den Anteil der Aldehyde eher erhöhen als verringern.

Aus der GB-A 2 005 149 und GB-A 2 036 585 sind Katalysatoren bekannt, bestehend aus einer durchgehende Kanäle entlang einer Hauptachse aufweisenden Matrix aus glatten und gewellten Lagen aus hochtemperaturfestem und zunderbeständigen Stahl, bzw. einem Stahl mit entsprechend widerstandsfähiger Oberfläche, welche abwechselnd angeordnet und zu einem Paket geschichtet oder spiralig zu einem Wickelkörper aufgerollt sind, einem darauf befindlichen Überzug aus Aluminiumoxid der Übergangsreihe und auf dem Überzug abgeschiedenen Edelmetallen. Diese Katalysatoren sind zur Reinigung von Abgasen aus Verbrennungskraftmaschinen geeignet.

Aus der EP-B-0 075 124 ist ein Katalysator für die Verbrennung von in Abgasen alkoholbetriebener Verbrennungskraftmaschinen enthaltenen Schadstoffen, bestehend aus einer durchgehende Kanäle entlang einer Hauptachse aufweisenden Matrix aus glatten und gewellten Lagen aus hochtemperaturfestem und zunderbeständigen Stahl, bzw. einem Stahl mit entsprechend widerstandsfähiger Oberfläche, welche abwechselnd angeordnet und zu einem Paket geschichtet oder spiralig zu einem Wickelkörper aufgerollt sind, einem darauf befindlichen Überzug aus gegebenenfalls 0,5 bis 40 Gew.% eines oder mehrerer Erdalkalimetalle und/oder Seltene Erdmetalle in Oxidform enthaltendem Aluminiumoxid der Übergangsreihe und auf dem Überzug abgeschiedenem Palladium in Mengen von 0,03 bis 3 Gew.%, bezogen auf das Gesamtgewicht von Überzug, bekannt.

Dieser Katalysator hat sich in der Zwischenzeit insoweit als verbesserungsbedürftig erwiesen, als er zum Gebrauch als Dreiweg-Katalysator bezüglich der Konversion der Schadstoffe und dem Anspringverhalten noch nicht völlig befriedigte.

Es wurde nun überraschenderweise gefunden, daß Palladium in Verbindung mit einem Aluminiumoxid der Übergangsreihe, welches gegebenenfalls gitterstabilisiert ist, bei der Konvertierung von im Abgas überwiegend mit Alkohol betriebener Verbrennungskraftmaschinen enthaltenen Aldehyden, Alkoholen und anderen Verunreinigungen gute Ergebnisse liefert, wenn diese Katalysatorbestandteile nicht nur auf einem metallischen strukturellen Verstärker in Form einer gasdurchströmbaren, temperatur- und korrosionsbeständigen Matrix aufgebracht sind, sondern wenn sie 0,5 bis 70 Gew.% an z. B. Ceroxid und 0,5 bis 30 Gew.% Molybdänsilicid, jeweils bezogen auf das Gewicht Aluminiumoxid, enthalten.

Ein Gegenstand der Erfindung sind die in den Stoffansprüchen 1 bis 7 gekennzeichneten Katalysatoren.

Ein anderer Gegenstand der Erfindung sind die in den Verfahrensansprüchen 8 bis 13 gekennzeichneten Herstellungsmethoden.

Ein wabenförmiger Metallträger, wie er nach Anspruch 9 verwendet werden kann, kann aus abwechselnd aufeinander angeordneten gewellten oder glatten hochtemperaturfesten, korrosionsbeständigen und zunderfesten Stahlblechen gefertigt sein. Er kann auch aus abwechselnd aufeinander angeordneten glatten und gewellten Lagen aus entsprechend unempfindlichem Stahl bestehen, wobei eine Lage aus gewelltem Blech mit einer Lage aus glattem Siebgewebe, oder eine Lage aus glattem Blech mit einer Lage aus gewelltem Siebgewebe, oder eine Lage aus gewelltem Siebgewebe mit einer Lage aus glattem Siebgewebe abwechselt. Anstelle des Siebgewebes können auch perforierte Bleche eingesetzt werden.

Die Lagen des Metallträgers können zu einem Paket geschichtet oder zu einer zylindrischen, ovalen, rechteckigen oder mehreckigen Spirale aufgewickelt sein. Die gewellte Lage kann verschieden geformt sein. Günstig ist, wenn sie Sinusform oder die Form einer Evolvente oder eine rechteckige oder quadratische oder trapezartige Form aufweist.

Die Effektivität von Katalysatoren mit monolithischem oder wabenförmigen Träger hängt in einem erheblichen Ausmaß von der Zelldichte (Kanaldichte) ab. Für den vorgesehenen Zweck hat es sich als günstig erwiesen, wenn eine Zelldichte von 31 bis 124 Zellen/$cm^2$ vorliegt.

Als Metall für kommen Metallwaben Legierungen mit den Hauptbestandteilen Eisen, Chrom, Aluminium und gegebenenfalls noch Cer oder Yttrium in Frage, wobei das Material zur Schaffung einer verankerungsgünstigen Oberfläche in einem sauerstoffhaltigen Gas unter Bedingungen von Temperatur und Zeit erhitzt wird, unter denen sich aus dem in der Legierung enthaltenen Aluminium eine Oberflächenschicht aus Aluminiumoxid ausbildet. Eine vorzugsweise Ausführungsform der Erfindung sieht also vor, daß die Wabe aus einem eine Deckhaut von festhaftendem Aluminiumoxid aufweisenden, Aluminium enthaltenden ferritischen Chromstahl besteht.

Das Metall für die Wabe kann aber auch ein einfacher Kohlenstoffstahl oder einfaches Gußeisen sein, welches mit einer Aluminium-Eisen-Diffusionsschicht, erhalten durch Tempern von aluminiumbeschichtetem Stahl oder Eisen bei hohen Temperaturen überzogen ist. Demgemäß sieht eine wegen ihrer niedrigen Kosten besonders bevorzugte Variante der Erfindung vor, daß die Metallwabe aus einem mit einer Al-Fe-Diffusionsschicht überzogenen Kohlenstoffstahl besteht.

Wenn eine aus Aluminium enthaltenden ferritischen Chromstahl bestehende Matrix verwendet wird, wird sie zur Erzeugung einer haftungsverbessernden rauhen Oberflächenoxidschicht vor dem Aufbringen des aktiven Aluminiumoxids 1 - 4 Stunden an Luft bei 800 bis 1100° C getempert. Diese Temperbehandlung kann auch schon auf die Ausgangsbestandteile der Wabe angewandt werden.

Wenn eine aus kostengünstigerem Kohlenstoffstahl bestehende Wabe verwendet werden soll, so beschichtet man diese, z. B. in einem Schmelzbad mit Aluminium und setzt dieses Verbundmaterial mindestens 1 Min. einer Temperatur im Bereich von 600 - 1200° C aus. Normalerweise werden Erhitzungsdauern zwischen 5 und 12 Minuten angewandt. Es entsteht dabei eine hochtemperaturbeständige, korrosionsfeste und zunderfeste Oberflächenschicht aus im wesentlichen aluminiumoxidfreier, aluminiumreicher Aluminiumeisen-Legierung, welche stark zerklüftet und damit haftgünstig ist. Die Erzeugung der Aluminium-Eisen-Diffusionsschicht kann auch schon auf den Ausgangsbestandteilen der Wabe, d. h. vor deren Montage, erfolgen.

Als Materialien für keramische monolithische Wabenkörper kommen Cordieriert, Mullit und $\alpha$-$Al_2O_3$ in Frage; auch $\gamma$-$Al_2O_3$-Monolithe sind verwendbar, wobei die Anbringung eines katalysefördernden Überzugs enfallen kann.

Nach einer weiteren Ausgestaltung des erfindungsgemäßen Verfahrens kann die Daueraktivität des Katalysators erheblich verbessert werden, wenn das Aluminiumoxid der Übergangsreihe gitterstabilisiert wird. Die Erfindung sieht hierfür vor, daß das aktive Aluminiumoxid vor dem Aufbringen auf die Matrix mit einem Salz oder Oxid eines oder mehrerer Erdalkalimetalle, des Zirkondioxids und/oder Seltener Erdmetalle vermischt und dann 0,5 bis 3 Stunden bei 600 -1100° C erhitzt wird; im wesentlichen werden dabei Elementoxide bzw. Elementoxidkombinationen eingesetzt, welche im Anspruch 3 aufgeführt sind.

Die Erfindung erstreckt sich schließlich auch auf die Verwendung des vorstehend stofflich und herstellungsmäßig beschriebenen Katalysators zur gleichzeitigen Beseitigung von Aldehyden, Alkoholen, wie Ethanol und Methanol, Kohlenmonoxid, Stickoxiden und Kohlenwasserstoffen aus den Abgasen von Verbrennungskraftmaschinen, welche ganz oder überwiegend mit Alkoholen, wie Methanol und Ethanol als Kraftstoff betrieben werden.

Der erfindungsgemäße Katalysator liefert eine Reihe überraschender Vorteile. So liefert die erfindungsgemäße Katalysatorzusammensetzung überraschend niedrige Anspringtemperaturen für die katalytische Reaktion und höhere Umsatzwerte insbesondere für Aldehyde als herkömmliche Katalysatoren auf Basis von Platin/Palladium und Palladium alleine.

Auch sind die Alterungseigenschaften gegenüber diesen bekannten Katalysatoren entscheidend verbessert.

Die Erfindung wird nachfolgend anhand von Ausführungsbeispielen näher erläutert.

Beispiel 1

Ein Katalysator mit der Bezeichnung A enthält als katalytisch aktive Komponente Palladium, welches in feinverteiltem Zustand auf einem mit γ-Aluminiumoxid beschichteten metallischen Wabenträger aus Aluminium enthaltendem ferritischen Chromstahl (mit 15 Gew.% Cr und 4,5 Gew.% Al, Rest Fe) abgeschieden ist. Das γ-Aluminiumoxid ist mit 6 Gew.% $ZrO_2$ und mit 5 Gew.% $CeO_2$ Komponente dotiert. Das Palladium liegt in einer Menge von 0,86 Gew.% vor, bezogen auf das Gewicht des Aluminiumoxids.

Ein zweiter, mit B bezeichneter Katalysator enthält dieselbe Palladiummenge wie Katalysator A und zusätzlich Molybdänsilicid ($MoSi_2$) als weitere aktive Katalysatorkomponente.

Das Palladium ist feinverteilt auf demselben Aluminiumoxid-beschichteten Wabenkorper, wie er für Katalysator A verwendet wurde, abgeschieden. Zur Einbringung des Molybdänsilicids wurde dieses in Pulverform (Teilchengröße: 98 % < 20 μm) der wäßrigen, γ-Aluminiumoxid und dieselbe Menge Zirkondioxid und Cerdioxid wie Katalysator A enthaltenden Beschichtungssuspension zugesetzt.

Der fertige Katalysator B enthält Palladium in einer Menge von 0.86 Gew.% und 13,9 Gew.% $MoSi_2$, neben 6 Gew.% $ZrO_2$ und 5 Gew.% $CeO_2$, jeweils bezogen auf das Gewicht des γ-Aluminiumoxids.

Es wurde die Dreiwegaktivität der Katalysatoren A und B an einem Motorprüfstand ermittelt. Der verwendete Motor war ein 1,8 l 4-Zylinder-Ottomotor, welcher mit einem Gemisch von 95 Vol.% wasserfreiem Ethanol, 2 Vol.% bleifreiem Benzin und 3 Vol.% Wasser gespeist wurde. Die Raumgeschwindigkeit während des Tests betrug 67 000 $h^{-1}$, die Abgastemperatur am Katalysatoreintritt war 450° C.

Die Dreiwegaktivität wurde unter diesen Bedingungen dadurch bestimmt, daß die Umsätze von Kohlenmonoxid, Kohlenwasserstoffen und Stickoxiden als Funktion des λ-Werts erfaßt wurden. Die Bezeichnung "Kohlenwasserstoffe" muß in diesem Zusammenhang als die Gesamtmenge von Komponenten, die durch einen Flammenionisationsdetektor erfaßt werden können, verstanden werden. Also werden mit "Kohlenwasserstoffen" sowohl Verbindungen zwischen Kohlenstoff und Wasserstoff, z. B. Methan, als auch Verbindungen zwischen Kohlenstoff, Wasserstoff und Sauerstoff, z. B. Ethanol, umschrieben. Der λ-Wert entspricht dem Verhältnis zwischen eingesetzter Luftmenge/Brennstoffmenge und stöchiometrischer Luftmenge/Brennstoffmenge. λ-Werte unter 1 stehen für fette oder reduzierende Abgaszusammensetzungen, λ-Werte oberhalb 1 für magere oder oxidierende Abgaszusammensetzungen.

Die Katalysatoren A und B wurden jeweils im frischen Zustand und nach einer 4-stündigen thermischen Alterung bei 750° C in Luft geprüft. Die Figuren 1 und 2 geben die Resultate für die frischen Katalysatoren an. Wie daraus ersichtlich ist, verbessert der Zusatz von Molybdänsilicid zu dem Palladiumkatalysator die Umsätze sowohl der Stickoxide wie der Kohlenwasserstoffe bei fetter Abgaszusammensetzung.

In den Figuren 3 und 4 sind die Resultate für die thermisch gealterten Katalysatoren angegeben. Wie daraus ersichtlich ist, ist der vorteilhafte Effekt des Molybdänsilicids nach dieser Alterung voll erhalten geblieben.

Beispiel 2

Um den vorteilhaften Effekt des Molybdänsilicid-Zusatzes zu einem Palladium-Katalysator zu zeigen, wurden drei weitere Katalysatoren hergestellt und getestet.

Der als Katalysator C bezeichnete Katalysator enthält nur Palladium als aktive Katalysatorkomponente. Dieser Katalysator ist dem Katalysator A, beschrieben in Beispiel 1, sehr ähnlich mit der Ausnahme, daß eine höhere Menge an sauerstoffspeichernder Komponente, 60 Gew.% $CeO_2$ und eine niedrigere Menge an $ZrO_2$, nämlich 3 Gew.%, jeweils bezogen auf das Gewicht des Aluminiumoxids, vorliegt. Der Palladiumgehalt dieses Katalysators betrug 1,4 Gew.%, bezogen auf das Gewicht des γ-Aluminiumoxids.

Ein mit D bezeichneter Katalysator enthält Palladium und Molybdänsilicid als aktive Katalysatorkomponenten. Das Palladium ist in feinverteiltem Zustand auf derselben Katalysatorkombination wie in Beispiel 1 (Metallträger mit Washcoat) abgeschieden.

Das Molybdänsilicid wurde der wäßrigen Suspension des Aluminiumoxids als Pulver mit einer Teilchengröße 98 % < 20 μm zugesetzt. Es wurde dasselbe gitterstabilisierte γ-Aluminiumoxid mit derselben $CeO_2$- und $ZrO_2$-Menge wie in Katalysator C angewandt: Molybdänsilicid lag in einer Mengen von 11,0 Gew.%, bezogen auf das Aluminiumoxidgewicht, vor.

Der fertige Katalysator D enthielt Palladium in einer Menge von 1,40 Gew.%, Molybdänsilicid in einer Menge von 11,0 Gew.%, Cerdioxid in einer Menge von 60 Gew.% und Zirkondioxid in einer Menge von 3,0 Gew.%, jeweils bezogen auf das Aluminiumoxidgewicht.

Ein weiterer, mit E bezeichneter Katalysator enthielt Palladium und Molybdäntrioxid ($MoO_3$) als katalytisch aktive Komponente. Das Palladium wurde in feinverteiltem Zustand auf demselben metallischen Wabenkörper abgeschieden, auf welchem zuerst ein γ-$Al_2O_3$-Washcoat mit einem Gehalt an 60 Gew.% $CeO_2$ und 3 Gew.% $ZrO_2$ und dann eine übliche Molybdänverbindung aufgebracht worden war. Das Molybdän wurde hier als wäßrige Ammoniumheptamolybdat-Lösung eingebracht. Der Washcoat bestand aus demselben stabilisierten und $CeO_2$-dotierten γ-Aluminiumoxid wie in Katalysator C, wobei dieselben Mengen vorlagen wie in Katalysator C. Dabei ist anzumerken, daß die $CeO_2$-Menge etwa der sechsfachen Menge entsprach, welche zur Reaktion mit Molybdäntrioxid unter Bildung stabilen Cer-Molybdates benötigt wird.

Der fertige Katalysator E enthielt Palladium in einer Menge von 1,40 Gew.%, Molybdäntrioxid in einer Menge von 14,0 Gew.%, Cerdioxid in einer Menge von 60 Gew.% und $ZrO_2$ in einer Menge von 3,0 Gew.%, jeweils bezogen auf das Aluminiumoxidgewicht.

Die Dreiwegaktivität und das Anspringverhalten der Katalysatoren C, D und E wurden auf dieselbe Weise wie in Beispiel 1 am Motorprüfstand ermittelt.

Die Dreiwegaktivität der Katalysatoren wurde bei 67 000 $h^{-1}$ Raumgeschwindigkeit und 450° C Katalysatoreintrittstemperatur ermittelt, indem die Umsätze von Kohlenmonoxid, Stickoxiden und Kohlenwasserstoffen als Funktion des λ-Wertes aufgetragen wurden.

Das Anspringverhalten der Katalysatoren wurde bei der angegebenen Raumgeschwindigkeit sowohl unter mageren (λ=1,02) als auch unter fetten Abgaszusammensetzungen (λ = 0,984) ermittelt, indem die Umsätze von Kohlenmonoxid, Stickoxiden und Kohlenwasserstoffen als Funktion der Katalysatoreintritt-Temperatur aufgetragen wurden.

Dreiwegaktivität und Anspringverhalten wurden jeweils an frischen, an hydrothermal gealterten und an Motor-gealterten Katalysatoren bestimmt. Die hydrothermale Alterung entspricht schärferen Alterungsbedingungen als in Beispiel 1, um sicherzustellen, daß die katalytische Aktivität auch unter extremen Fahrbedingungen zum Ausdruck kommt. Diese Alterung wurde in einem Strom von 90 Vol.% Stickstoff und 10 Vol.% Wasser während 4 Stunden bei 985° C durchgeführt.

Die Motoralterung der Katalysatoren wurde während 85 Stunden mit einem 1,8 l 4-Zylinder Ethanol-Motor bei 3500 rpm Drehzahl und 35 kW Bremskraft durchgeführt. Die Abgaszusammensetzung war stöchiometrisch (λ = 1,0), die Abgasmenge entsprach einer Raumgeschwindigkeit von 160 000 l Gas/h/l Katalysatorvolumen; die Abgastemperatur am Katalysatoreintritt war 700° C. Diese Bedingungen entsprechen ca. 20 000 km Fahrbetrieb.

Die Ergebnisse des Tests für die Dreiwegaktivität an den hydrothermal gealterten Katalysatoren C, D und E sind in den Figuren 5, 6 und 7 angegeben.

Die Figuren zeigen, daß beide Katalysatoren D und E eine weit bessere Konversionsleistung für Stickoxide und Kohlenwasserstoffe bei fetten Abgaszusammensetzungen liefern als der Molybdänsilicid- und Molybdäntrioxidfreie Katalysator C.

Die Ergebnisse der an den hydrothermal gealterten Katalysatoren C, D und E durchgeführten Anspringtests zeigen sehr deutlich den günstigen Einfluß der Verwendung von Molybdänsilicid bei Palladium/Seltenerdoxid-haltigen Katalysatoren.

Wie aus Tabelle I hervorgeht, ist die Temperatur, bei der 50 % der Stickoxide entfernt werden, bei Katalysator D um 30° C tiefer als bei Katalysator C und um 85° C tiefer als bei Katalysator E.

Tabelle I

| Katalysat. | Anspringverhalten der hydrothermal gealterten Katalysatoren C, D und E bei fetten und mageren Abgaszusammensetzungen | | |
|---|---|---|---|
| | Lambda = 0.984 | Lambda = 1.020 | |
| | Temperatur für 50 % Konversion | | |
| | $NO_x$ (°C) | CO (°C) | HC (°C) |
| C | 307 | 275 | 320 |
| D | 272 | 292 | 322 |
| E | 357 | 307 | 337 |

Die Ergebnisse der Dreiweg-Aktivitätstests an den Motor-gealterten Katalysatoren C, D und E sind in den Figuren 8, 9 und 10 dargestellt. Die Figuren zeigen, daß die Konvertierung der Kohlenwasserstoffe und der Stickoxide bei fetten und stöchiometrischen Abgaszusammensetzungen an dem Motor-gealterten Katalysator D deutlich besser ist als an den Motor-gealterten Katalysatoren C und E.

Auch die Temperaturen, bei der 50 % der Stickoxide konvertiert werden, sind deutlich niedriger für Katalysator D im Vergleich zu den Katalysatoren C und E, wie in Tabelle II gezeigt.

Tabelle II

| Katalysator | Anspringverhalten der Motor-gealterten Katalysatoren C, D und E bei fetten und mageren Abgaszusammensetzungen | | |
|---|---|---|---|
| | Lambda = 0,984 | Lambda = 1,02 | |
| | Temperatur für 50 % Konversion | | |
| | $NO_x$ (°C) | CO (°C) | HC (°C) |
| C | 450 | 245 | 275 |
| D | 345 | 250 | 290 |
| E | 450 | 250 | 285 |

An den Motor-gealterten Katalysatoren C, D und E wurde auch die Konvertierung der Aldehyde bei 450° C Abgastemperatur vor Katalysator, $\lambda$ = 0,998 und 67 000 l Gas/l Katalysator/h gemessen.

Wie aus Tabelle III hervorgeht, ist die Konvertierung der Aldehyde an dem Motor-gealterten Katalysator D etwas besser als an dem Motor-gealterten Katalysator E aber weitgehend besser als an dem Motor-gealterten Katalysator C.

**Tabelle III** Konvertierung der Aldehyde an Motor-gealterten Katalysatoren (Temperatur: 450° C;, λ = 0,998; Raumgeschwindigkeit: 67 000 l Gas/l Katalysatorvol./h

| Katalysator | Aldehydkonvertierung |
|---|---|
| C | 72 % |
| D | 94 % |
| E | 87 % |

Zusammenfassend zeigen die Ergebnisse, daß sowohl die Katalysatorleistung als auch die Alterungsstabilität durch Zugabe von Molybdänsilicid anstelle herkömmlicher Molybdänverbindungen weitgehend verbessert werden können und daß sowohl die Leistung als auch die Alterungsstabilität von molybdänfreien Katalysatoren weitgehend geringer ist als die von Molybdän enthaltenden Katalysatoren.

**Patentansprüche**

1. Katalysator für die Beseitigung von in Abgasen überwiegend mit Alkohol betriebener Verbrennungskraftmaschinen enthaltenen Schadstoffen, bestehend aus a) Aluminiumoxid der Übergangsreihe als Träger, b) ein oder mehrere Seltene Erdmetalle in Oxidform und c) Palladium in eine Menge von 0,03 bis 3 Gew.%, bezogen auf das Gesamtgewicht des Aluminiumoxids,
**dadurch gekennzeichnet,**
daß er 0,5 bis 70 Gew.% der Komponente Seltenerdmetalloxid und 0,5 - 30,0 Gew.% Molybdänsilicid ($MoSi_2$), jeweils bezogen auf das Aluminiumoxidgewicht, enthält.

2. Katalysator nach Anspruch 1,
**dadurch gekennzeichnet,**
daß das Aluminiumoxid als Formling für ein Schüttgutbett oder als Überzug auf einem monolithischen bzw. wabenförmigen keramischen oder metallischen Träger vorliegt.

3. Katalysator nach Anspruch 1 oder 2,
**dadurch gekennzeichnet,**
daß das Aluminiumoxid der Übergangsreihe mit Calcium-, Strontium-, Barium-, Zirkon- oder Ceroxid und/oder mit Kombinationen La-Nd, La-Nd-Ce oder La-Nd-Pr-Ce, welche jeweils als Mischung der einzelnen Elementoxide vorliegen, gitterstabilisiert ist.

4. Katalysator nach den Ansprüchen 1 bis 3,
**dadurch gekennzeichnet,**
daß der monolithische bzw. wabenförmige Träger eine Kanaldichte von 31 bis 124 Zellen/$cm^2$ hat.

5. Katalysator nach Anspruch 4,
**dadurch gekennzeihnet,**
daß der monolithische bzw. wabenförmige Träger aus glatten und gewellten Lagen eines hochtemperaturfesten und zunderbeständigen Stahls bzw. eines Stahls mit entsprechend widerstandsfähiger Oberfläche besteht, welche abwechselnd angeordnet und zu einem Paket geschichtet oder spiralig zu einem Wickelkörper aufgerollt sind, wobei die glatten und/oder die gewellten Lagen aus perforierten Blechen oder Siebgewebe bestehen.

6. Katalysator nach Anspruchen 4 oder 5,
**dadurch gekennzeichnet,**
daß der monolithische bzw. wabenförmige Träger aus einem eine Deckhaut von festhaftendem Aluminiumoxid aufweisenden, Aluminium enthaltenden ferritischen Chromstahl besteht.

7. Katalysator nach den Ansprüchen 4 bis 6,
**dadurch gekennzeichnet,**
daß der monolithische bzw. wabenförmige Träger aus einem mit einer Al-Fe-Diffusionsschicht überzogenen Kohlenstoffstahl besteht.

8. Verfahren zur Herstellung des Katalysators nach den Ansprüchen 1 bis 3 in Schüttgutform,
**dadurch gekennzeichnet,**
daß man ein geformtes, gegebenenfalls gitterstabilisiertes Gemisch von $Al_2O_3$ und $MoSi_2$ im Gewichtsverhältnis 100 : 0,1 - 15 mit einer Salzlösung des jeweiligen Seltenen Erdmetalls imprägniert, trocknet, bei 250 - 750° C an Luft während 30 - 180 Min. calciniert und die dotierten Formlinge dann mit einer Palladiumsalz enthaltenden wäßrigen Lösung imprägniert, anschließend trocknet und den Schüttgutkatalysator schließlich durch Erhitzen auf 250 - 650, vorzugsweise 400 - 500° C in oxidierender und/oder reduzierender Atmosphäre bzw. im Strom des zu reinigenden Abgases aktiviert bzw. formiert.

9. Verfahren zur Herstellung des Katalysators nach den Ansprüchen 4 bis 7,
**dadurch gekennzeichnet,**
daß man den monolithischen bzw. wabenförmigen Träger mittels einer Dispersion des gegebenenfalls gitterstabilisierten Aluminiumoxids und des Molybdänsilicids mit einem Überzug der beiden Stoffe versieht und in diesen Überzug das Seltenerdmetalloxid durch Imprägnieren mit einer Salzlosung des seltenen Erdmetalls, Trocknen und Calcinieren bei 250 - 750° C an Luft während 30 bis 180 Min. einbringt, oder den genannten Träger mit vereinigten Dispersionen des gegebenenfalls gitterstabilisierten und mit Seltenerdmetalloxid in an sich bekannter Weise vorbeladenen aktiven Aluminiumoxids und des Molybdänsilicids in Berührung bringt, den Überzug trocknet, ihn an Luft 30 - 180 Min. bei 250 - 750° C tempert und dann jeweils mit einer Palladiumsalz enthaltenden wäßrigen Lösung imprägniert, anschließend erneut trocknet und den Katalysator schließlich durch Erhitzen auf Temperaturen von 250 - 650, vorzugsweise 400 - 500° C, in oxidierender und/oder reduzierender Atmosphäre bzw. im Strom des zu reinigenden Abgases aktiviert bzw. formiert.

10. Verfahren zur Herstellung des Katalysators nach Anspruch 8 oder 9,
**dadurch gekennzeichnet,**
daß man das Gemisch aus $Al_2O_3$ und $MoSi_2$ als geformtes Schüttgut oder als Überzug auf dem monolithischen bzw. wabenförmigen Träger mit einer die Salze aller Zusatzstoffe (Seltene Erdmetalle, Palladium) enthaltenden Lösung versetzt und nach Trocknen den Katalysator nach den Erhitzungsbedingungen der Ansprüche 8 bzw. 9 fertigstellt.

11. Verfahren nach Anspruch 9,
**dadurch gekennzeichnet,**
daß eine aus Aluminium enthaltendem ferritischen Chromstahl bestehende Matrix vor dem Aufbringen des aktiven Aluminiumoxids 1 - 4 Stunden an Luft bei 800 - 1000° C getempert wird.

12. Verfahren nach Anspruch 9,
**dadurch gekennzeichnet,**
daß eine aus Kohlenstoffstahl bestehende Matrix vor dem Aufbringen des aktiven, gegebenenfalls gitterstabilisierten Aluminiumoxids und des Molybdänsilicids mit Aluminium beschichtet und dieses Verbundmaterial mindestens 1 Min. einer Temperatur im Bereich von 600 - 1200° C ausgesetzt wird.

13. Verfahren nach den Ansprüchen 8 bis 12,
**dadurch gekennzeichnet,**
daß das Aluminiumoxid der Übergangsreihe zur Gitterstabilisierung vor dem Aufbringen auf die Matrix mit einem Salz oder Oxid eines oder mehrerer Erdalkalimetalle, des Zirkons und/oder Seltener Erdmetalle vermischt und dann 0,5 - 3 Stunden bei 600 - 1000° C erhitzt wird.

14. Verwendung des Katalysators nach den vorstehenden Ansprüchen zur gleichzeitigen Beseitigung von Aldehyden, Alkoholen, Kohlenmonoxid, Stickoxiden und Kohlenwasserstoffen aus den Abgasen von Verbrennungskraftmaschinen, welche überwiegend mit Alkoholen als Kraftstoff betrieben werden.

## Claims

1. Catalyst for the removal of harmful substances contained in exhaust gases of internal combustion engines driven predominantly on alcohol, consisting of a) aluminium oxide of the transition series as a carrier, b) one or more rare earth metals in oxide form and c) palladium in an amount of from 0.03 to 3% by weight, based on the total weight of the aluminium oxide,
characterised in that
it contains from 0.5 to 70% by weight of the rare earth metal oxide component and from 0.5 to 30.0% by weight of molybdenum silicide ($MoSi_2$), based in each case on the weight of the aluminium oxide.

2. Catalyst according to Claim 1,
characterised in that
the aluminium oxide is present as a shaped piece for a bulk material bed or as a coating on a monolithic or honeycombed ceramic or metallic carrier.

3. Catalyst according to Claim 1 or Claim 2,
characterised in that
the aluminium oxide of the transition series is lattice-stabilized with calcium oxide, strontium oxide, barium oxide, zirconium oxide or cerium oxide and/or with combinations of La-Nd, La-Nd-Ce or La-Nd-Pr-Ce which are present in each case as a mixture of the individual oxides of the elements.

4. Catalyst according to Claims 1 to 3,
characterised in that
the monolithic or honeycombed carrier has a channel density of from 31 to 124 cells/cm$^2$.

5. Catalyst according to Claim 4,
characterised in that
the monolithic or honeycombed carrier consists of smooth and corrugated layers of a refractory and scale-resisting steel or of a steel having a correspondingly resistant surface, which layers are arranged alternately and/or stacked to form a packet or rolled up spirally to form a coil, wherein the smooth and/or the corrugated layers consist of perforated metal sheets or screen fabric.

6. Catalysts according to Claims 4 or 5,
characterised in that
the monolithic or honeycombed carrier consists of a ferritic chromium steel containing aluminium and having a covering layer of strongly adhering aluminium oxide.

7. Catalysts according to Claims 4 to 6,
characterised in that
the monolithic or honeycombed carrier consists of a carbon steel coated with an Al-Fe diffusion layer.

8. A process for the preparation of the catalyst according to Claims 1 to 3 in the form of bulk material,
characterised in that
a shaped, optionally lattice stabilized mixture of $Al_2O_3$ and $MoSi_2$ in the ratio by weight of 100 : 0.1 - 15 is impregnat ed with a salt solution of the given rare earth metal, dried, and calcined in air at 250 to 750°C for 30 to 180 minutes, and the doped shaped pieces are then impregnated with an aqueous solution containing a palladium salt, then dried, and the bulk material catalyst is finally activated and shaped by heating at 250 - 650°C, preferably at 400 - 500°C, in an oxidizing and/or reducing atmosphere or in the stream of the exhaust gas to be purified.

9. A process for the preparation of the catalyst according to Claims 4 to 7,
characterised in that
the monolithic or honeycombed carrier is provided with a coating of the optionally lattice stabilized aluminium oxide and of the molybdenum silicide by means of a dispersion of the two substances, and the rare earth metal oxide is introduced into this coating by impregnation with a salt solution of the rare earth metal, drying and calcining in air at 250 - 750°C for 30 to 180 minutes, or the said carrier is brought into contact with combined dispersions of the optionally lattice stabilised active aluminium oxide which is precharged with rare earth metal oxide in a manner known per se, and of the molybdenum silicide, the coating is dried and is tempered in air at 250 - 750°C for 30 - 180 minutes and then impregnated in each case with an aqueous solution containing palladium salt, then dried once again, and the catalyst is finally activated by heating to temperatures of 250 - 650°C, preferably 400 - 500°C, in an oxidizing and/or reducing atmosphere or in the stream of the exhaust gas to be purified.

10. A process for the preparation of the catalyst according to Claim 8 to 9,
characterised in that
to the mixture of $Al_2O_3$ and $MoSi_2$ in the form of a shaped bulk material or as a coating on the monolithic or honeycombed carrier is added a solution containing the salts of all the additives (rare earth metals, palladium), and after drying, the catalyst is finished under the heating conditions of Claims 8 and/or 9.

11. A process according to Claim 9,
characterised in that
a matrix consisting of ferritic chromium steel containing aluminium is tempered in air at 800 to 1000°C for 1 to 4 hours before the active aluminium oxide is applied.

12. A process according to Claim 9,
characterised in that
a matrix consisting of carbon steel is coated with aluminium before application of the active, optionally lattice stabilized aluminium oxide and of the molybdenum silicide, and the resulting composite material is subjected to a temperature in the range of from 600 - 1200°C for at least one minute.

13. A process according to Claims 8 to 12,
characterised in that
the aluminium oxide of the transition series is mixed with a salt or oxide of one or more alkaline earth metals, of zirconium and/or rare earth metals for lattice stabilization before its application to the matrix, and is then heated at 600 - 1000°C for 0.5 - 3 hours.

14. Use of the catalyst according to the preceding Claims for the simultaneous removal of aldehydes, alcohols, carbon monoxide, nitrogen oxides and hydrocarbons from the exhaust gases of internal combustion engines which are driven predominantly on alcohols as the fuel.

**Revendications**

1. Catalyseur pour l'élimination de substances nocives contenues dans des gaz d'échappment de moteurs à combustion interne fonctionnant en majeure partie à l'alcool, constitué: a) d'un oxyde d'aluminium de la série de transition en tant que support, b) d'une ou plusieurs terres rares sous forme d'oxyde et, c) du palladium en une quantité de 0,03 à 3 % en poids, par rapport au poids total de l'oxyde d'aluminium,
caractérisé en ce
qu'il contient de 0,5 à 70 % en poids du composant oxyde de terre rare et de 0,5 à 30,0 % en poids de siliciure de molybdène ($MOSi_2$), chacun par rapport au poids de l'oxyde d'aluminium.

2. Catalyseur selon la revendication 1,
caractérisé en ce que
l'oxyde d'aluminium se trouve sous forme de corps moulé pour un lit de matériau en vrac, ou de revêtement sur un support métallique ou céramique monolithique ou alvéolé.

3. Catalyseur selon la revendication 1 ou 2,
caractérisé en ce que
l'oxyde d'aluminium de la série de transition est stabilisé en treillis avec de l'oxyde de calcium, de strontium, de baryum, de zirconium ou de cérium et/ou avec des combinaisons La-Nd, La-Nd-Ce ou La-Nd-Pr-Ce qui se trouvent chacune sous forme de mélange des oxydes élémentaires individuels.

4. Catalyseur selon l'une quelconque des revendications 1 à 3,
caractérisé en ce que
le support monolithique ou alvéolé a une densité de canaux de 31 à 124 cellules/$cm^2$.

5. Catalyseur selon la revendication 4,
caractérisé en ce que
le support monolithique ou alvéolé est constitué de couches planes et de couches ondulées d'un acier résistant à haute température et résistant au calaminage ou d'un acier à surface résistante correspon dante, qui sont disposées alternativement et empilées en un paquet ou enroulées en spirale en un rouleau, les couches planes et/ou les couches ondulées étant constituées de tôles perforées ou de toile métallique.

6. Catalyseur selon la revendication 4 ou 5,
caractérisé en ce que
le support monolithique ou alvéolé est constitué d'un acier au chrome ferritique contenant de l'aluminium et présentant une couche superficielle d'oxyde d'aluminium adhérente.

7. Catalyseur selon l'une quelconque des revendications 4 à 6,
caractérisé en ce que
le support monolithique ou alvéolé est constitué d'un acier en carbone revêtu d'une couche de diffusion Al-Fe.

8. Procédé pour la fabrication du catalyseur selon l'une quelconque des revendications 1 à 3, sous forme de matériau en vrac,
caractérisé en ce que
l'on imprègne avec une solution de sel de la terre rare respective un mélange de $Al_2O_3$ et $MoSi_2$ en rapport pondéral de 100 : 0,1 à 15, moulé, éventuellement stabilisé en treillis, on le sèche, on le calcine à l'air pendant 30 - 180 minutes à 250 - 750° C et on imprègne ensuite avec une solution aqueuse contenant un sel de palladium les corps moulés dopés, puis on les sèche et enfin on active ou forme le catalyseur en matériau en vrac par chauffage à 250 - 650° C, de préférence à 400 - 500° C, en atmosphère oxydante et/ou réductive ou, respectivement, dans le courant du gaz à échappement à épurer.

9. Procédé pour la fabrication du catalyseur selon l'une quelconque des revendication 4 à 7,
caractérisé en ce que,
à l'aide d'une dispersion de l'oxyde d'aluminium éventuellement stabilisé en treillis et du siliciure de molybdène, on revêt avec un revêtement des deux substances, le support monolithique ou alvéolé, on incorpore dans ce revêtement l'oxyde de terre rare par imprégnation avec une solution de sel de la terre rare, séchage et calcination à l'air à 250 - 750° C pendant 30 à 180 minutes, ou on met en contact ledit support avec des dispersions réunies de siliciure de molybdène et de l'oxyde d'aluminium actif, chargé au préalable d'oxyde de terre rare, d'une façon connue en soi, et, éventuellement, stabilisé en treillis, on sèche le revêtement, on le traite thermiquement à l'air pendant 30 - 180 minutes à 250 - 750° C et on l'imprègne ensuite avec une solution aqueuse contenant un sel de palladium, et enfin on active ou forme le catalyseur par chauffage à des températures de 250 - 650° C, de préférence de 400 - 500° C, en atmosphère oxydante et/ou réductive ou, respectivement, dans le courant du gaz d'échappement à épurer.

10. Procédé pour la fabrication du catalyseur selon la revendication 8 ou 9,
caractérisé en ce que
l'on ajoute une solution contenant les sels de tous les additifs (terres rares, palladium) au mélange de $Al_2O_3$ et $MoSi_2$ sous forme de matériau en vrac moulé ou de revêtement sur le support monolithique ou alvéolé, et, après séchage du catalyseur, on achève de le traiter dans les conditions de chauffage de la revendication 8 ou 9.

11. Procédé selon la revendication 9,
caractérisé en ce que,
avant l'application de l'oxyde d'aluminium actif, on traite à l'air, pendant 1 à 4 heures, à 800 - 1000° C, une matrice constituée d'acier au chrome ferritique contenant de l'aluminium.

12. Procédé selon la revendication 9,
caractérisé en ce que,
avant l'application de l'oxyde d'aluminium actif, éventuellement stabilisé en treillis, et du siliciure de molybdène, on revêt avec de l'aluminium une matrice constituée d'acier au carbone, et on expose pendant au moins 1 minute ce matériau composite à une température dans la plage de 600 à 1200° C.

13. Procédé selon l'une quelconque des revendications 8 à 12,
caractérisé en ce que,
avant l'application sur la matrice, on mélange l'oxyde d'aluminium de la série de transition, pour la stabilisation en treillis, avec un sel ou oxyde d'un ou plusieurs métaux alcalino-terreux, du zirconium et/ou de terres rares, et ensuite on le chauffe à 600 - 1000° C pendant 0,5 à 3 heures.

14. Utilisation du catalyseur selon l'une quelconque des reven dications précédentes pour l'élimination simultanée d'aldéhydes, d'alcools, de monoxyde de carbone, d'oxydes d'azote et d'hydrocarbures hors des gaz d'échappement de moteurs à combustion interne qui fonctionnent en majeure partie avec des alcools en tant que carburant.

Fig. 1: Katalysator A - frischer Zustand
Konvertierung stat.

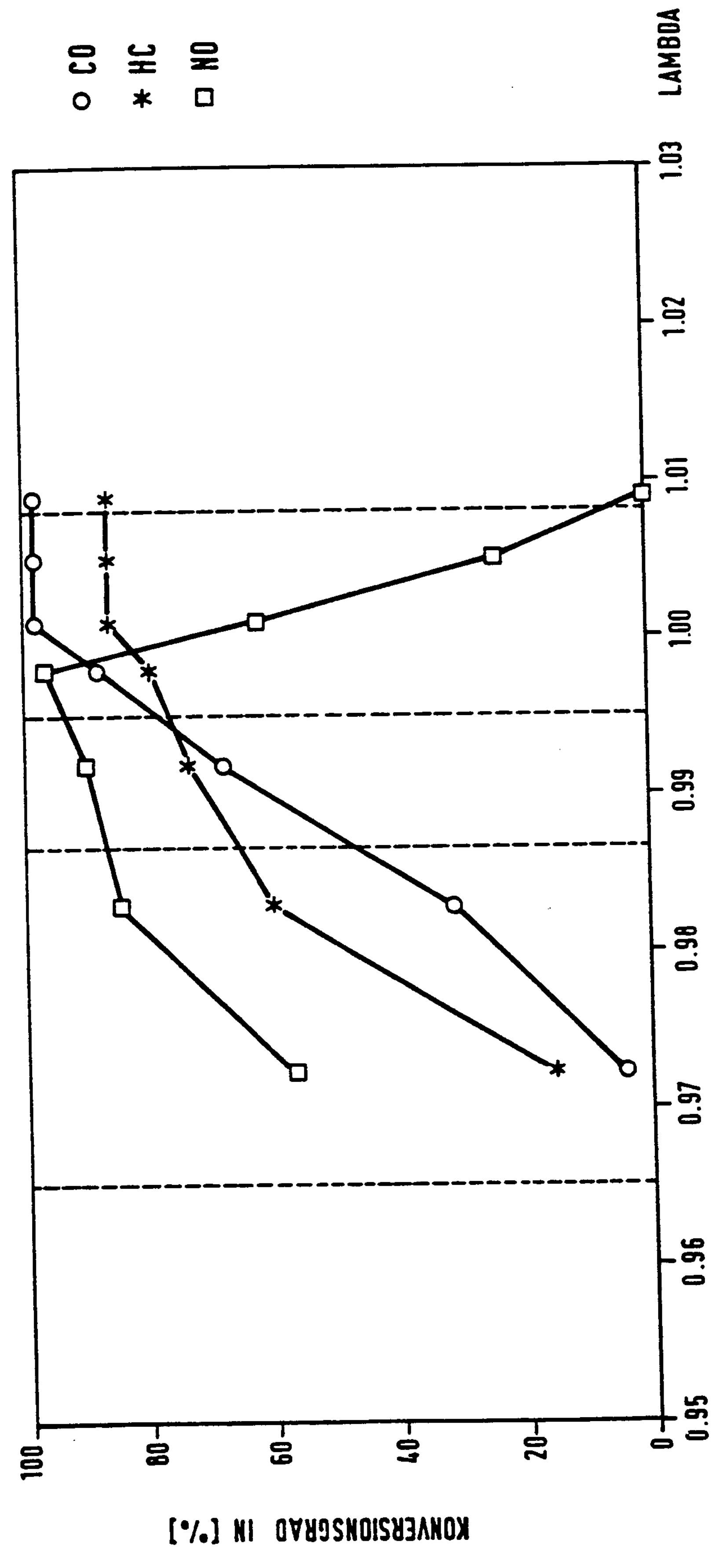

**Fig. 2** : Katalysator B – frischer Zustand
Konvertierung stat.

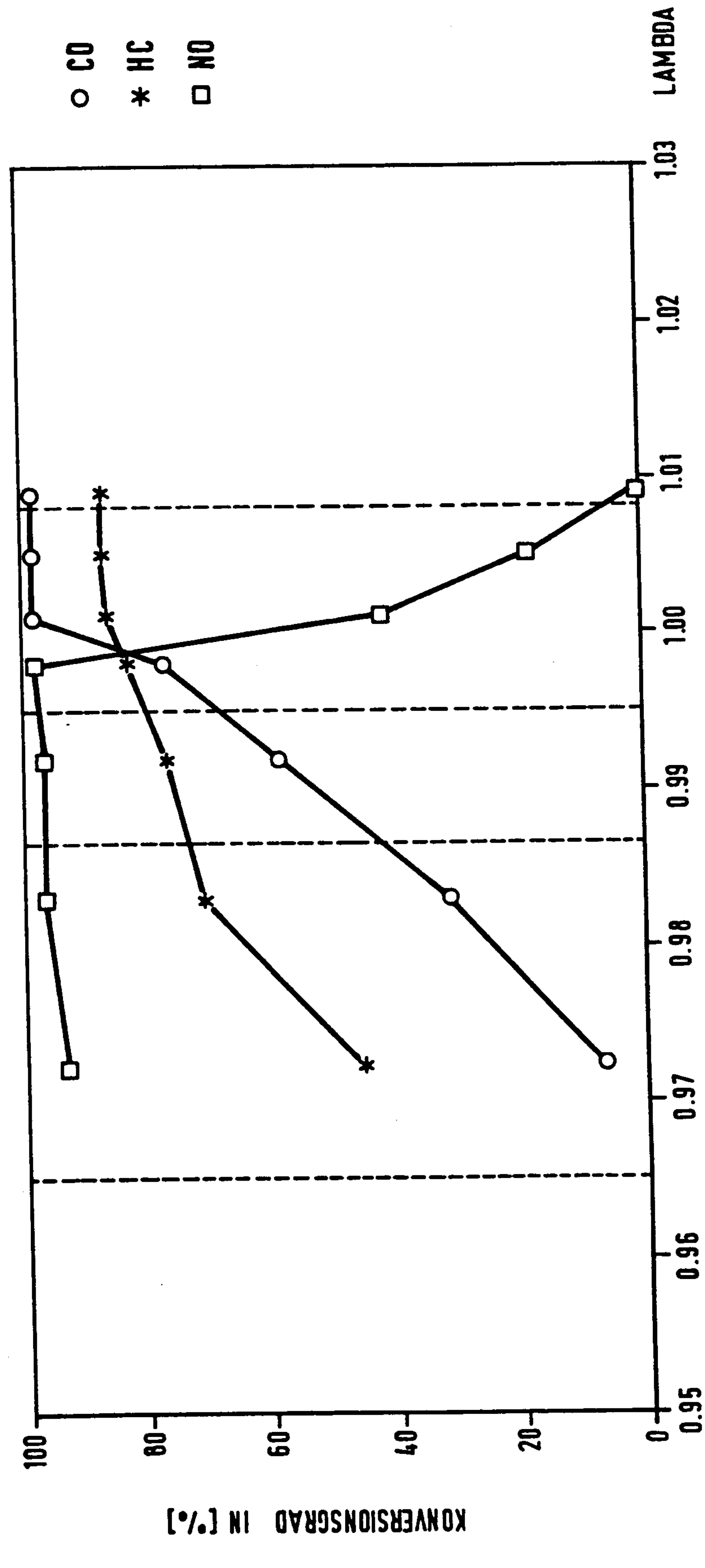

**Fig. 3** Katalysator A - thermisch gealterter Zustand Konvertierung stat.

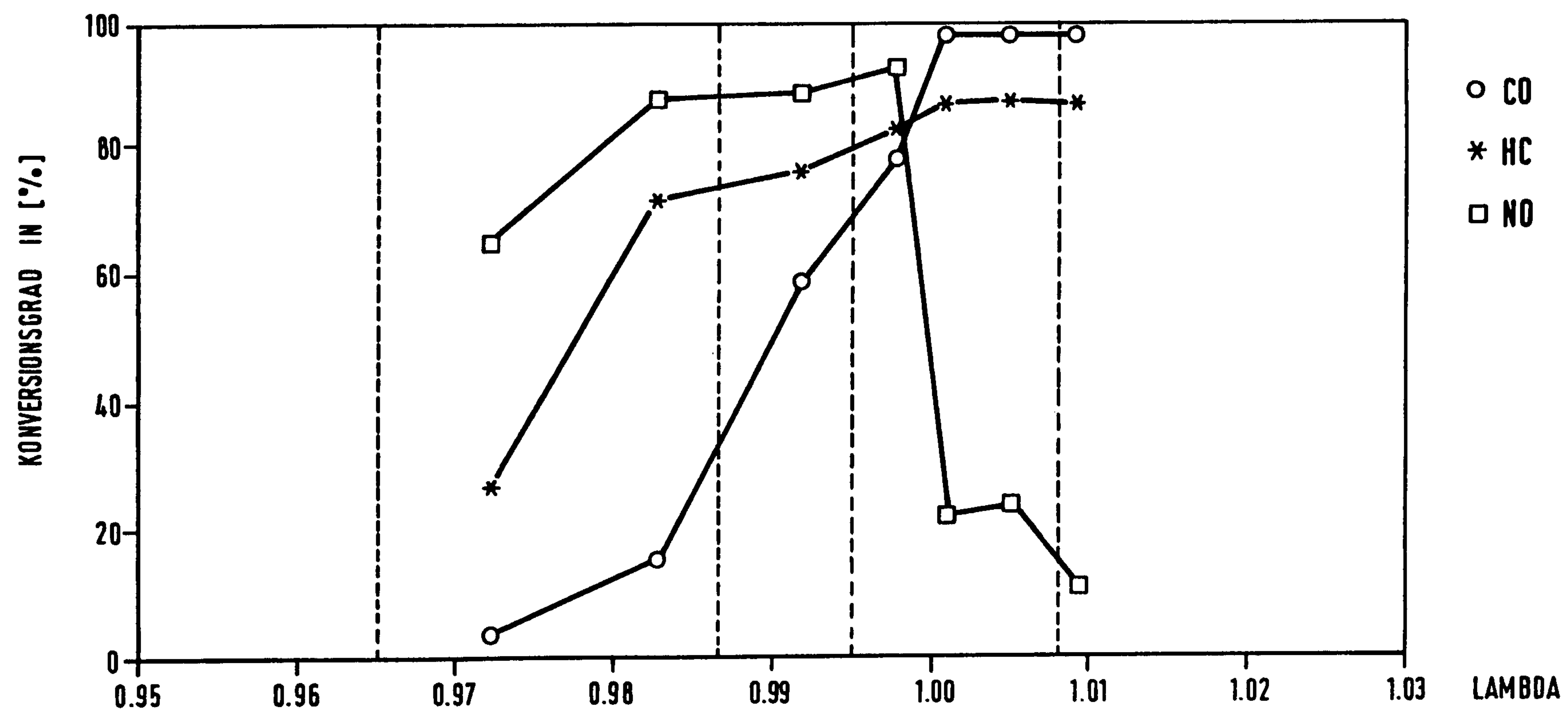

Fig. 4 Katalysator B - thermisch gealterter Zustand
Konvertierung stat.

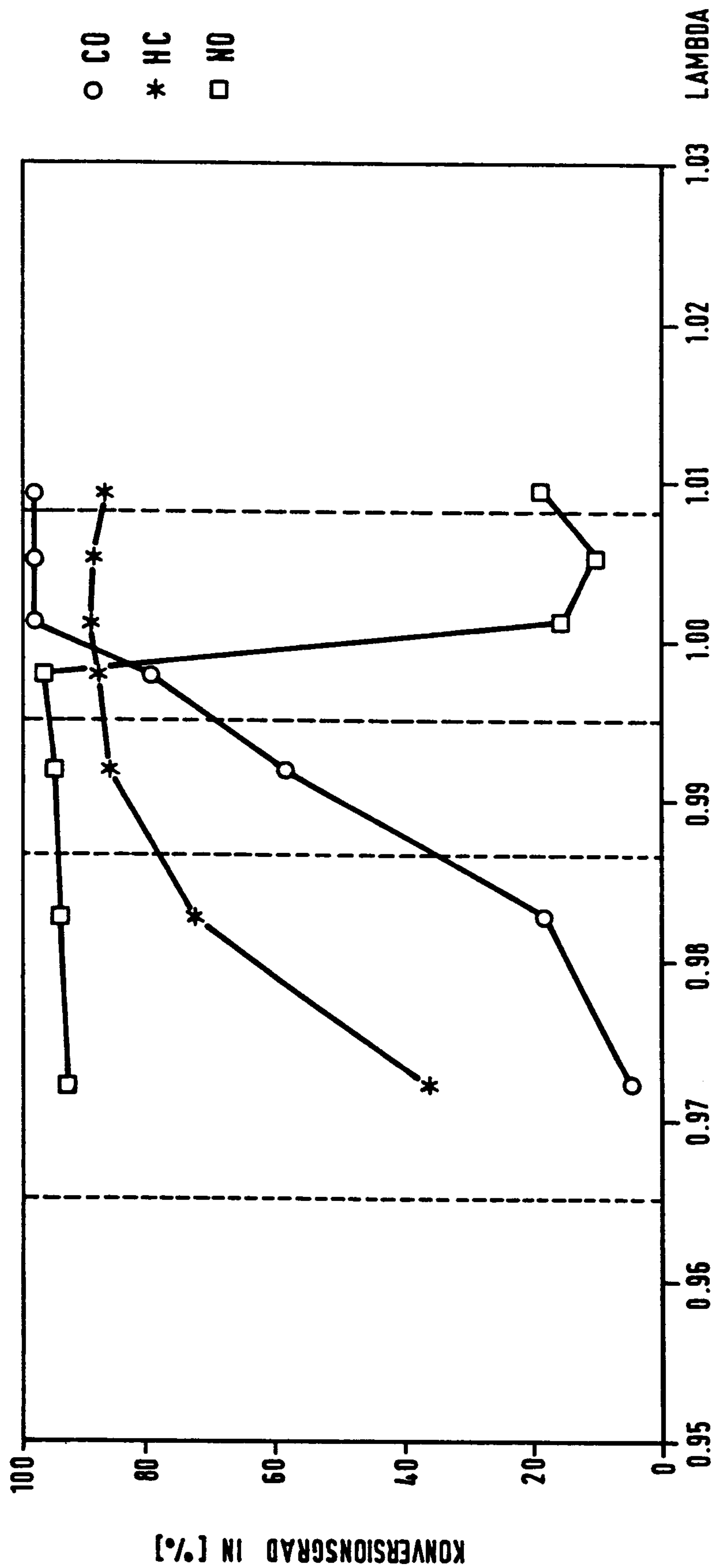

**Fig. 5** Katalysator C - hydrothermal gealterter Zustand Konvertierung stat.

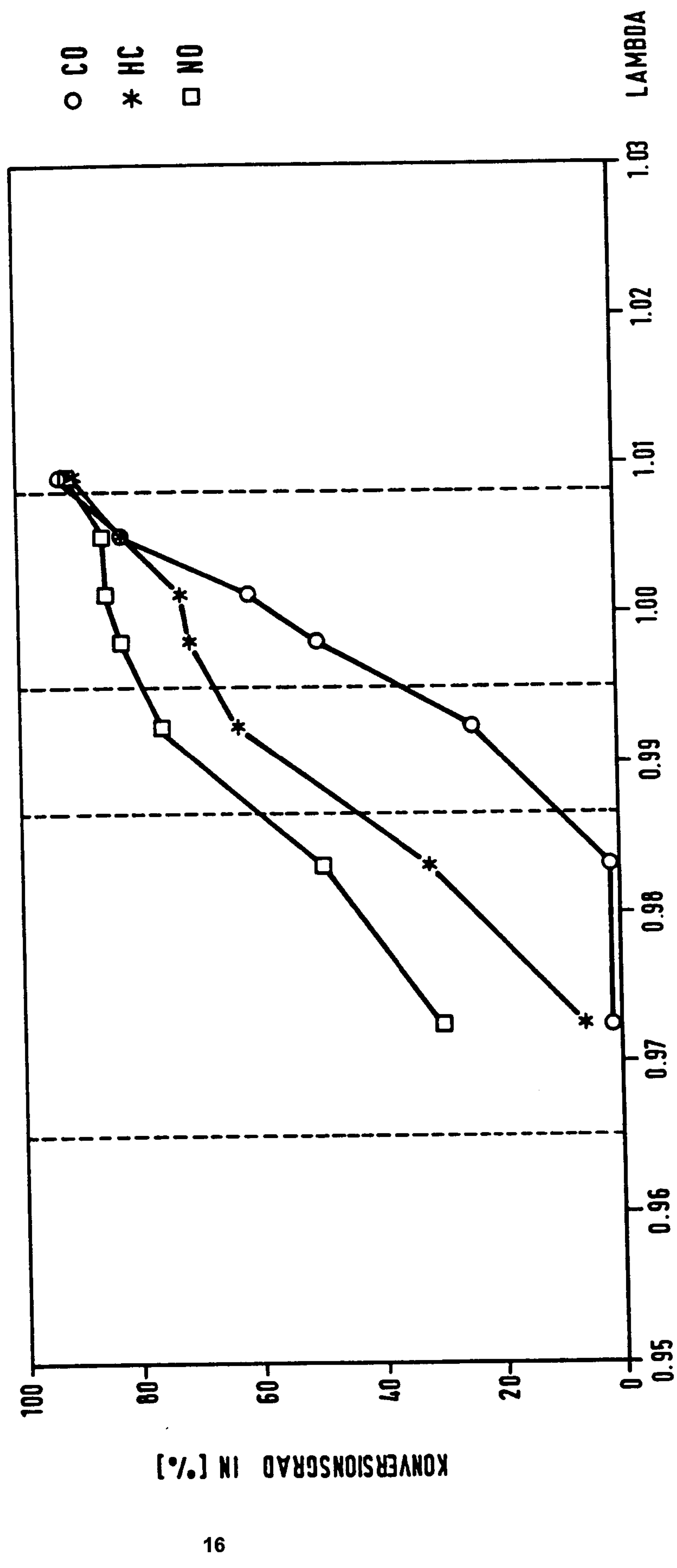

Fig. 6 Katalysator D - hydrothermal gealterter Zustand
Konvertierung stat.

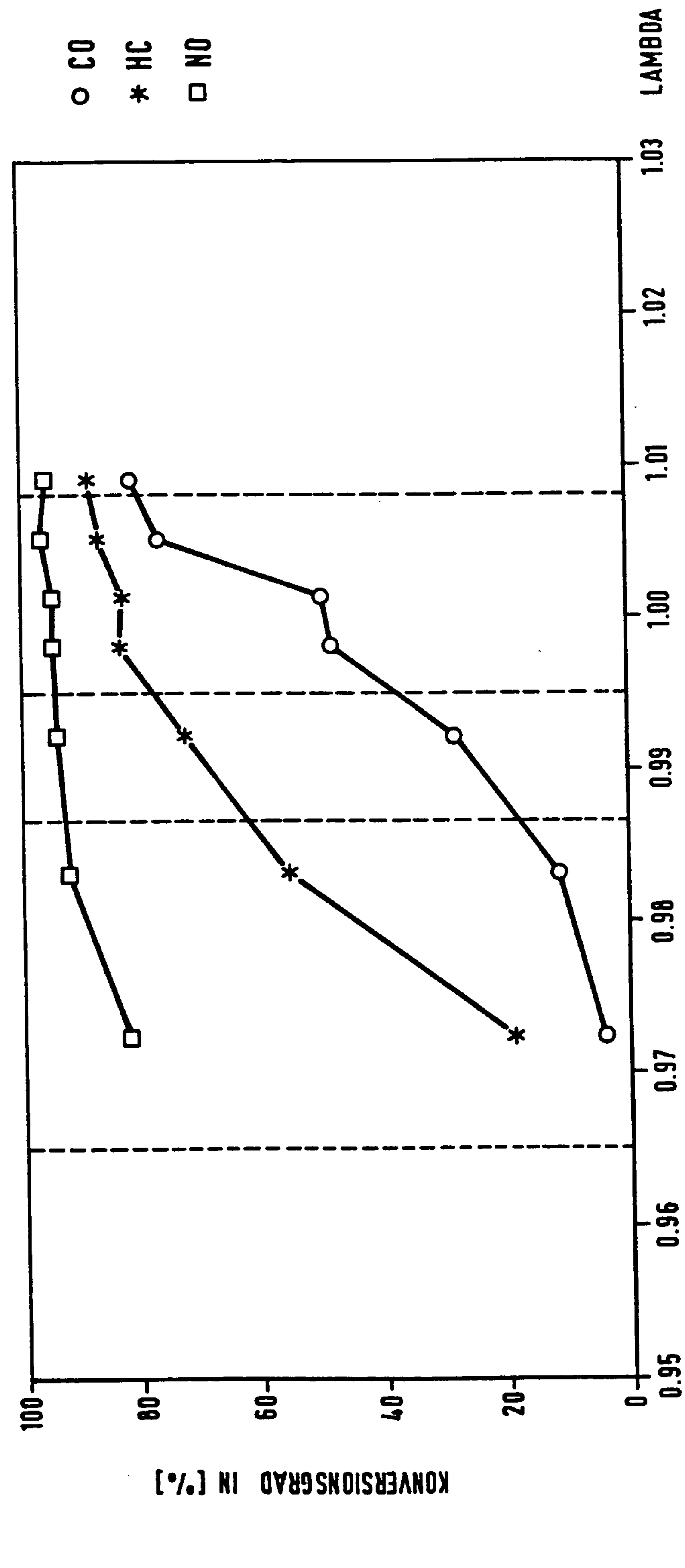

**Fig. 7** Katalysator E - hydrothermal gealterter Zustand Konvertierung stat.

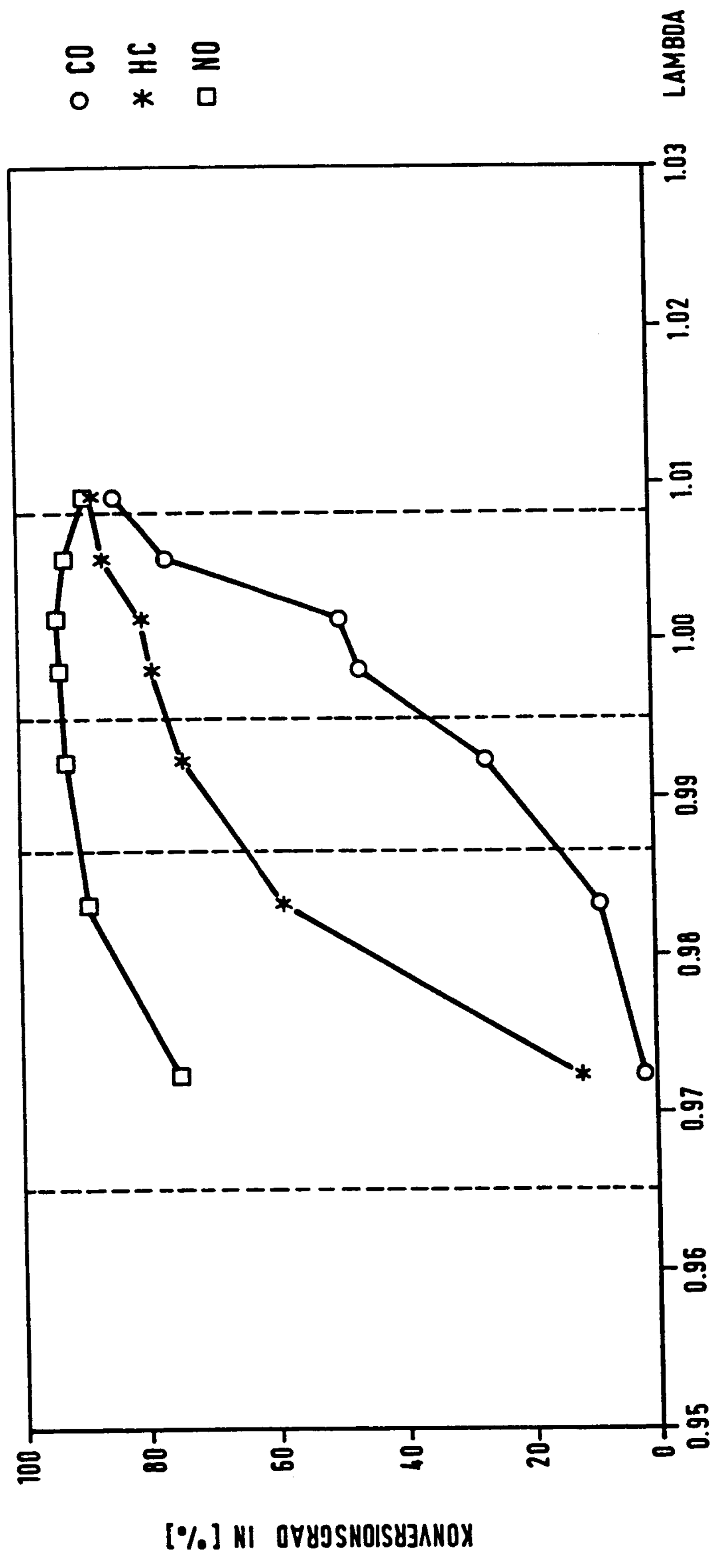

Fig. 8 Katalysator C - Motor-gealterter Zustand
Konvertierung stat.

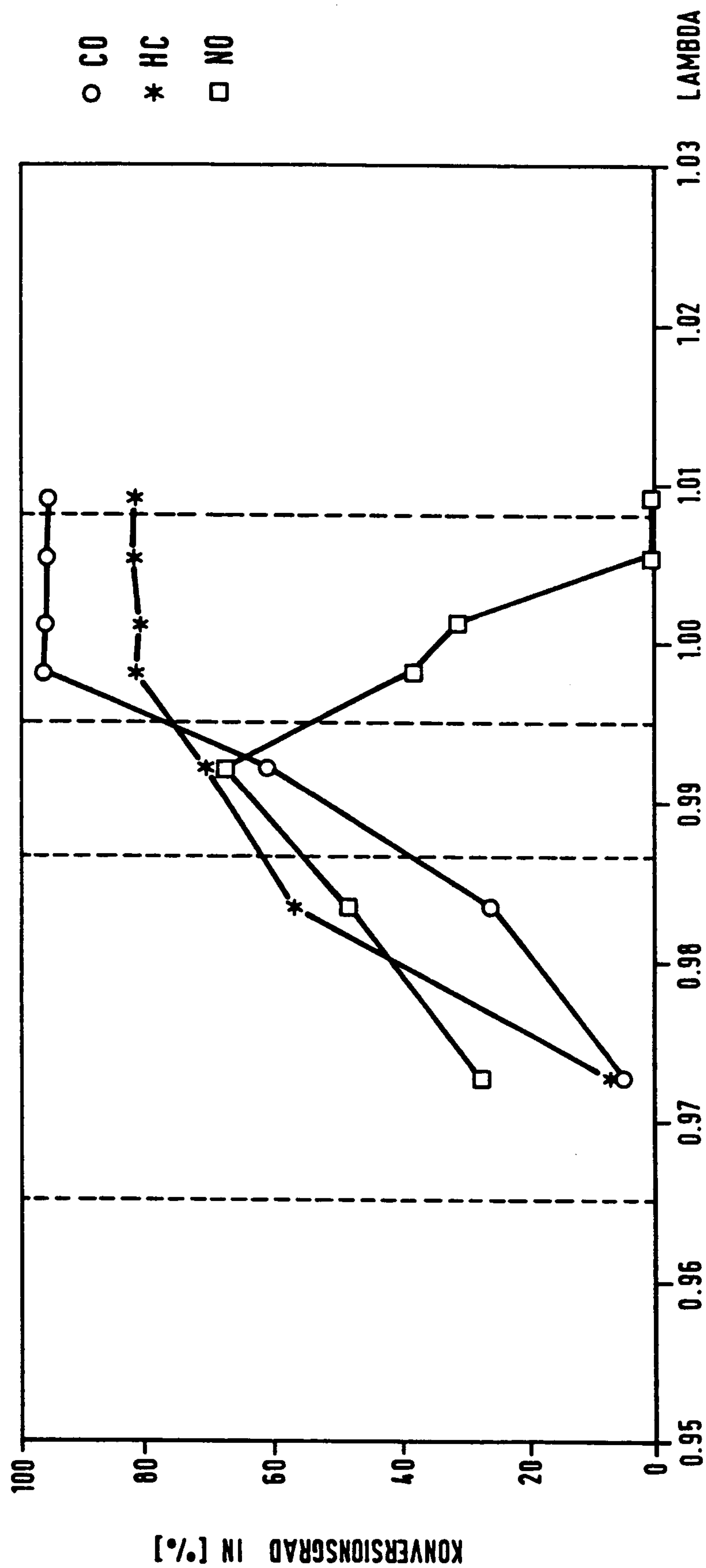

Fig. 9 Katalysator D - Motor-gealterter Zustand
Konvertierung stat.

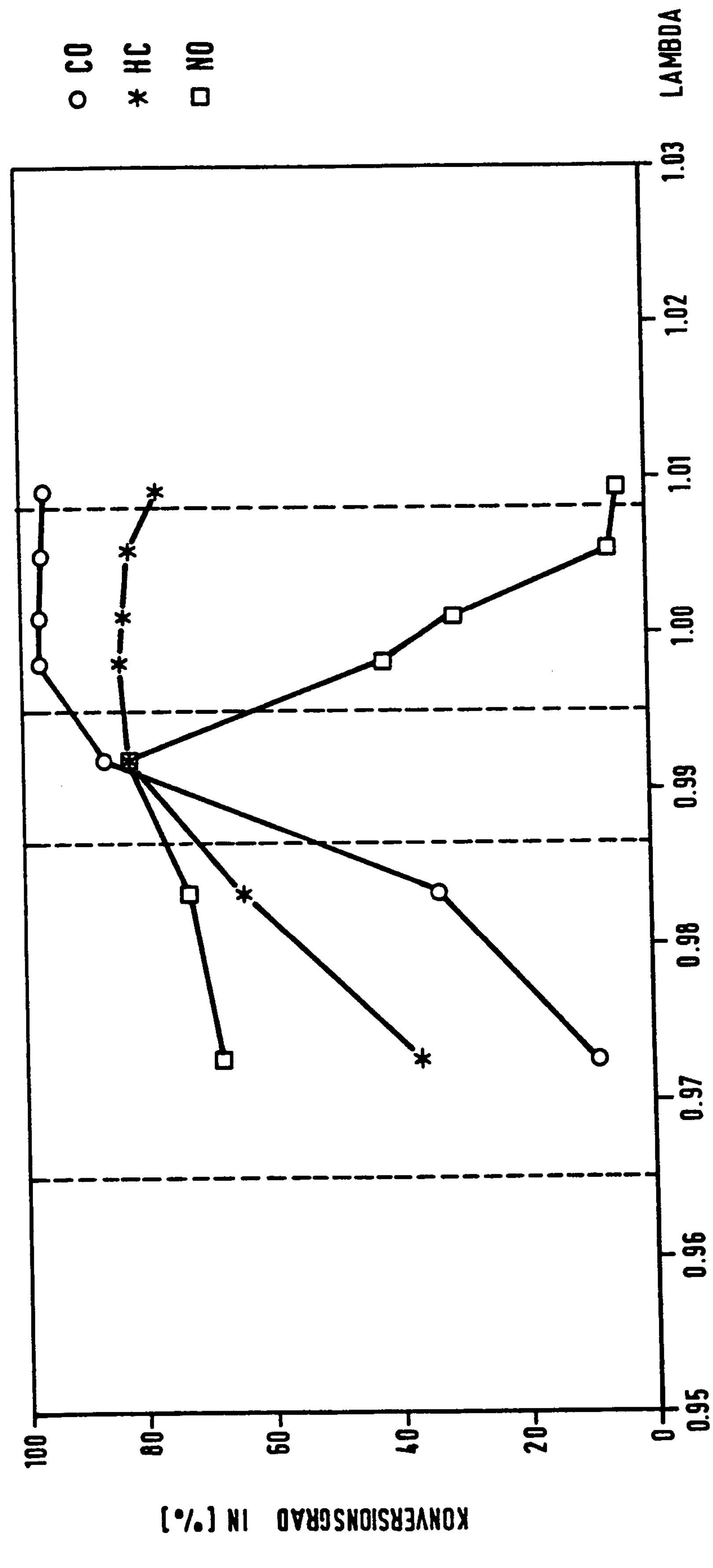

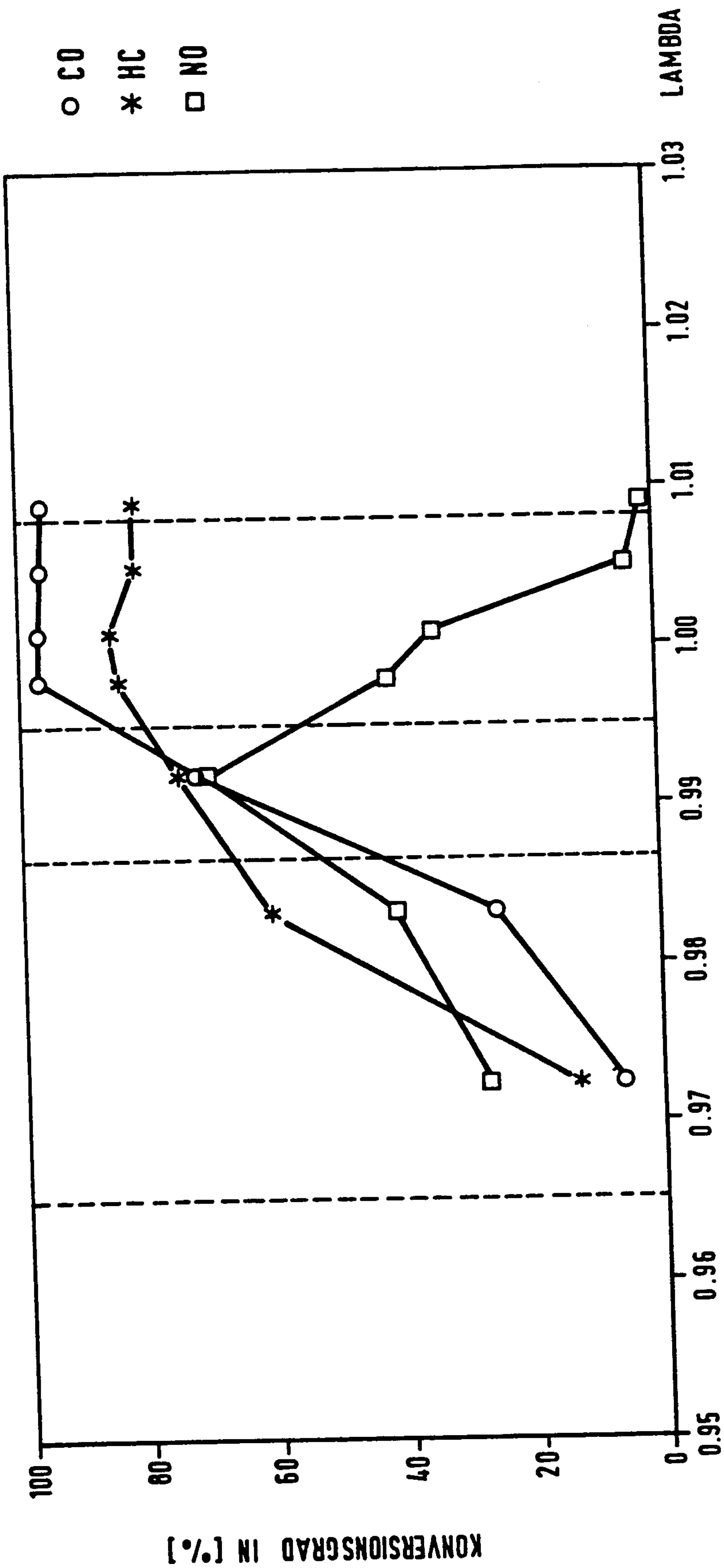


Fig. 10 Katalysator E - Motor-gealterter Zustand
Konvertierung stat.